# EUROPÄISCHE PATENTSCHRIFT

(11) **EP 0 886 592 B1**
(45) Veröffentlichungstag und Bekanntmachung des Hinweises auf die Patenterteilung: **16.10.2002**
(21) Anmeldenummer: 97954947.4
(22) Anmeldetag: 23.12.1997
(51) Int. Cl.: B60S 9/04, B60S 9/12

(54) **HÖHENVERSTELLBARE STÜTZE FÜR SATTELAUFLIEGER**
VERTICALLY ADJUSTABLE SUPPORT FOR SEMITRAILERS
SUPPORT AJUSTABLE EN HAUTEUR POUR SEMI-REMORQUES

(30) Priorität: 04.01.1997 DE 19700214; 09.01.1997 DE 19700459; 12.02.1997 DE 19705275
(43) Veröffentlichungstag der Anmeldung: 30.12.1998
(73) Patentinhaber: RIEDL, Reinhold, Dipl.-Ing., D-63897 Miltenberg (DE)
(72) Erfinder: RIEDL, Reinhold, Dipl.-Ing., D-63897 Miltenberg (DE)
(86) Internationale Anmeldenummer: EP9707269
(87) Internationale Veröffentlichungsnummer: WO98029287

(56) Entgegenhaltungen:
- EP-A- 0 460 396
- EP-A- 0 529 958
- DE-A- 4 435 630
- DE-A- 4 446 931

## Beschreibung

Die Neuerung bezieht sich auf eine höhenverstellbare Stütze für Sattelauflieger oder dergleichen, mit einem ortsfest angebrachten Außenrohr, einem im Außenrohr längsverschiebbar angeordneten Innenrohr und einem am äußeren Ende des Innenrohres querverschiebbar und schwenkbeweglich befestigten Fußteil, bei der das Stützen-Innenrohr durch eine mit dem Stützen-Außenrohr verbundene, vorzugsweise motorischen Antriebsvorrichtung, in die Arbeitsstellung oder Transportstellung verstellbar ist.

Derartige höhenverstellbare Stützen für Sattelauflieger sind in meist paarweiser Anordnung als Stützvorrichtungen zu verwenden, welche vorzugsweise von Sattelschleppern der neuen Generation traktiert werden, die über ihrer Hinterachse mit durch Druckluft aufblasbaren Federbälgen ausgerüstet sind und mit ausreichendem Hub ihr Heck und damit über die Sattelkupplung auch den Vorderbereich des aufliegenden Sattelaufliegers anzuheben in der Lage sind. Daher ist bei solchen Stützen nur ein belastungsfreies Aus- und Einfahren des Stützen-Innenrohres, d.h. dieses alternativ in die Arbeitsstellung (Abstützstellung), in der nach Verriegelung im Stützen-Außenrohr und nach später erfolgendem Absenken durch den Sattelschlepper das Gewicht des vorderen Sattelaufliegerbereichs am Boden abgetragen, oder in Transportstellung (Ruhestellung) der Stützen, in der sie danach mit erforderlicher Bodenfreiheit in Fahrbetrieb gehen zu bringen notwendig. Im Vergleich zu den bisher ausschließlich benutzten Stützen in Form von schweren, umständlich mit sperrigen Handkurbeln zu bedienenden vorzugsweise Spindel-Stützwinden, welche hohen mechanischen Aufwand bedingen und zeitraubende Bedienung erfordern, bieten die in Rede stehenden belastungsfrei höhenverstellbaren Sattelaufliegerstützen große bauliche und bedienungsmäßige Vorteile. Sofern solche Stützen motorisch, vorzugsweise mittels pneumatischer Betätigungszylinder, angetrieben werden besteht jedoch bisher bei Ausfall des Antriebes manuell keine Möglichkeit deren Betrieb aufrecht zu erhalten. Bei den oben genannten, heute vorherrschenden luftgefederten Sattelaufliegern kann es während längeren Standzeiten im abgesattelten Zustand, hervorgerufen durch Druckverlust z.B. in den Luftfederbälgen oder im Druckluftleitungssystem, zum Absinken des hinteren Bereichs kommen. Über die Kinematik des in der Regel im abgestellten Zustand des Sattelaufliegers gebremsten Achsaggregats entsteht dabei ein Längsschub am Sattelauflieger, dem starre Stützen, wegen der Reibhaftung am Boden, nicht zu folgen in der Lage sind. Die Stützen sind in dieser Situation einer Schub- und Biegebeanspruchung ausgesetzt, die zu ihrer Beschädigung führen kann. Um die Beschädigungen der Stützen zu vermeiden wurden nach dem Aufkommen luftgefederter Achsen an Sattelaufliegern sog. Ausgleichsfüße für Stützen entwickelt, womit zwar der geschilderte Schub durch einen Rollvorgang auf Fußplatten zum größten Teil ausgeglichen wird, wobei jedoch ungünstiger Weise alle bisherigen technische Lösungen einen erheblichen baulichen Aufwand erfordern und immer eine Gewichts- und Bauhöhenvergrößerung der Stützen zur Folge haben. Das wirkte bzw. wirkt bis heute in vielen Fällen jedoch im besonderen Maße bei zukunftsorientierten Konzeptionen von Großraum-Sattelaufliegern einer Vergrößerung deren Ladevolumens entgegen.

Aus der DE 44 22 501 A1 ist eine höhenverstellbare Stütze für Sattelauflieger bekannt. Diese Stütze weist eine motorische oder alternativ manuelle Antriebsvorrichtung auf, die eine Schaltkulisse besitzt an der sich keilförmige Stege befinden, welche zur Verriegelung des Stützen-Innenrohres dienende Bolzen verschieben und so das Stützen-Innenrohr entriegeln, bevor das Stützen-Innenrohr nach oben oder unten verstellt wird. Die keilförmigen Stege sind nur in einer Richtung wirksam. Daher ist die Antriebsvorrichtung dieser Stütze auch nur in der Lage die genannten Bolzen einzuziehen, d.h. das Stützen-Innenrohr lediglich zu entriegeln. Da diese Antriebsvorrichtung lediglich eine sog. bifunktionale Wirkungsweise hat, d.h. nur die Entriegelung und die anschließende Verstellung des Stützen-Innenrohres über sie möglich ist, sind bei einer solchen Stütze zwecks Verriegelung des Stützen-Innenrohres in Arbeitsstellung oder Transportstellung Federn, die axial auf die zur Verriegelung dienenden Bolzen wirken vorgesehen. Die Verriegelung, die im besonderen in der Arbeitsstellung sehr sicher, d.h. absolut zuverlässig zu erfolgen hat ist dabei, wie ausgeführt ausschließlich von Federn als sicherheitsrelevante Elemente mit, bekannter Weise, bedingter Zuverlässigkeit abhängig. Die Federn, die das Verriegeln bewirken sollen, müssen dabei vorgespannt, während des gesamten Verstellhubes der Stütze den Bolzen an die Innenwand des Stützen-Außenrohres anpressen, damit beim Erreichen der Deckungsgleichheit des Bolzens mit einer Rohrwand-Öffnung im Stützen-Außenrohr die Verriegelung des Stützen-Innenrohres mit dem Stützen-Außenrohr erfolgen kann. Das bedingt Reibungsverluste und Aufwand, insbesondere wie vorgeschlagen, bei Ausgestaltung der Bolzen mit Rollelementen. Diese bekannte Stütze ist in der Ausgestaltung mit motorischem Antrieb, z.B. in Form eines pneumatischen Betätigungszylinders im Störfall, beispielsweise beim Ausfall der Druckluft, total funktionsunfähig, sie kann manuell weder entriegelt noch verstellt werden, wodurch erhebliche Störfall-Folgekosten für Nutzungsausfall des Transporters entstehen können.

Die DE 44 26 361 A1 zeigt eine höhenverstellbare Stütze für Sattelauflieger. Diese besitzt am unteren Bereich eine quer zur Fahrtrichtung des Sattelaufliegers gelagerte Bewegungs-/Tragvorrichtung in Form einer Schwinge, welche eine Fußplatte trägt, die während ihres Einsatzes eine Steuerung der Schwinge bewirkt. Zu diesem Zweck besitzt die Fußplatte vom Boden wegweisende Tragwände, die in ihrem oberen Randzonen Steuer-/Gleitbahnen aufweisen. Die Schwinge ist mit gegeneinander wirkenden Spiralfedern verspannt und so in Mittelstellung gehalten. Jeweils eine der Spiralfedern wird beim zwangsweisen Verschieben der Stütze, d.h. beim Abrollen ihres Rollelements auf der Fußplatte weiter vorgespannt und bewirkt nach dem Abheben der Stütze vom Boden die Rückstellung der Fußplatte in Symmetrie zur Stützenlängsachse. Ungünstiger Weise sind die Bewegungs-/Tragvorrichtung als auch die Tragwände der Fußplatte aufwendig und stehen außerdem auf beiden Seiten der Stützenrohre über. Trotz Kröpfung der Schwinge besteht dabei zusätzlich der Nachteil, daß das Stützen-Innenrohr nicht vollends in das Stützen-Außenrohr einfahren kann. Dadurch nimmt die Bauhöhe der Stützen zu, was insbesondere bei modernen Großraum-Sattelaufliegern mit tiefliegender Ladefläche ungünstig ist. Die aufwendige Bewegungs-/Tragvorrichtung sowie die Fußplatte mit den vom Boden wegweisenden Tragwänden sind sperrige, außenliegende, verschmutzungs- und vereisungsgefährdete Teile, die ungünstiger Weise das Gewicht der Stützen erhöhen. Außerdem sind die genannten außenliegenden Teile der Beschädigungsgefahr ausgesetzt und das Design dieser Stützen ist davon negativ beeinflußt.

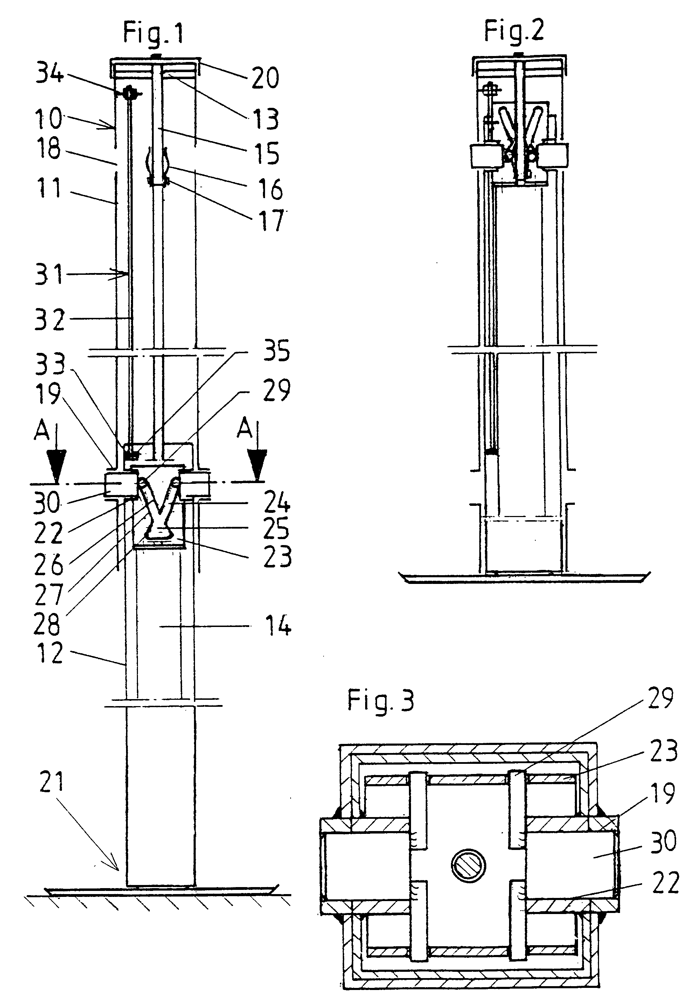

Ferner ist aus der DE 40 03 414 A1 ein Stützfuß einer Teleskop-Stützeinrichtung für Sattelanhänger bekannt, der generell alle technischen und wirtschaftlichen Nachteile eines vorher beschriebenen Ausgleichsfußes in erhöhtem Maße besitzt, weshalb außer dem Hinweis auf dessen besonders ungünstige, d. h. große Bauhöhe, auf eine Wiederholung bereits dargelegter Negativkriterien verzichtet wird. Dieser Stützfuß weist eine Federeinrichtung auf, die eine Rückstellung eines verschwenkbaren Rollsegments relativ zur Fußplatte bewirkt. Ein Stab durchsetzt Seitenwände des Rollsegments und Öffnungen in den Seitenwänden des Fußelements. Die Federeinrichtung dient lediglich dem gen. Zweck und nicht der eigentlichen Befestigung der Fußplatte. Da die Federeinrichtung aus freiliegenden Schraubenfedern besteht ist sie, insbesondere während des Ausgleichshubes (s. Fig.2 der genannten. Schrift) erheblicher Beschädigungs- und Verschmutzungsgefahr ausgesetzt.

Der Erfindung liegt die Aufgabe zugrunde eine Stütze für Sattelauflieger zu schaffen, deren vorzugsweise motorisch betriebene Antriebsvorrichtung das Stützen-Innenrohr entriegelt, nach oben oder unten verstellt, in der Arbeitsstellung automatisch verriegelt, mit der die Verriegelung in Transportstellung technisch günstiger bewerkstelligt wird, im Not-Handbetrieb betreibbar ist und bei der mit weniger baulichem Aufwand als bisher sowie bei geringerer Bauhöhe, unter Wegfall verschmutzungs- und beschädigungsgefährdeter Teile, sowie Gewichtsreduzierung der beim Absinken des hinteren Bereichs des Sattelaufliegers, infolge Druckverlustes seiner Luftfederung, entstehende Schub kostengünstiger, sicher kompensiert wird und mit allen technischen und ökonomischen Vorteilen auch im Design neuzeitiger Transporttechnik entspricht.

Gemäß der Erfindung wird diese Aufgabe durch die im Anspruch 1 gekennzeichnete Stütze gelöst.

Eine Stütze mit diesen Merkmalen ist baulich einfach und bietet aufgrund ihrer zwangsweisen Verriegelung des Stützen-Innenrohres ein Höchstmaß an Betriebssicherheit. Zu diesem Zweck werden die Verriegelunsgbolzen zwischen Steuerbahnen in mindestens einem von einem Betätigungszylinder bewegten Blech geführt, von dem sie wechselweise in die eine oder andere Richtung verschoben werden, was ein Ver- oder Entriegeln bewirkt. Die Verriegelung in Arbeitsstellung erfolgt zwangsläufig derart, daß entweder eine Anschlageinrichtung oder durch Aufsetzen des Fußteils auf den Boden das Stützen-Innenrohr beim Erreichen der Arbeitsstellung gestoppt wird womit die Verriegelungsbolzen höhenmäßig ihre Verriegelungsposition erreicht haben und der Betätigungszylinder, der die Verstellung bewirkte bei Ausübung seines weiteren Hubvermögens über das vorzugsweise an seinem Kopf befestigte, durchbrochene Blech mit schrägen Steuerbahnen die Verriegelungsbolzen verschiebt und in Verriegelungsstellung bringt bzw. vor der Verriegelung die Verriegelungsbolzen zunächst höhenmäßig in Verriegelungsposition gebracht hat. Während des Verstellhubes, werden die Verriegelungsbolzen nicht gegen die Innenwände des Stützen-Außenrohres gepreßt wodurch keine Reibung entsteht. In der anderen Hubrichtung des, d.h. bei der Verstellung des Stützen-Innenrohres in die Transportstellung wirken gegenüberliegende Steuerbahnen des durchbrochenen Blechs entgegengesetzt verschiebend auf die Verriegelungsbolzen ein und sorgen während des Anfangshubes des Betätigungszylinders, noch vor dem Anheben des Stützen-Innenrohres, für dessen Entriegelung. Der Betätigungszylinder dieser Neuerung erfüllt somit in besonders wirtschaftlicher Weise je nach Betriebsfall der Stütze nacheinander drei Funktionen, nämlich ein Verriegeln, Entriegeln und Verstellen des Stützen-Innenrohres. Vorteilhafter Weise werden erst unmittelbar vor dem Erreichen der Transportstellung von den Verriegelungsbolzen ortsfeste Federn angefahren und erst jetzt vorgespannt. Die Federn bewirken durch Axialdruck auf die Verriegelungsbolzen deren Verschiebung und damit die Verriegelung des Stützen-Innenrohres für den Transport. Über weitere Steuerbahnen des Blechs am Betätigungszylinder, die erst nach erfolgter, zuletzt beschriebener, Verriegelung berührt werden, erfolgt vor dem erneuten Verstellhub des Stützen-Innenrohres in die Arbeitsstellung, während des Anfangshubes des Betätigungszylinders, wobei die ortsfesten Federn zwangsweise überwunden werden, das Einziehen der Verriegelungsbolzen, d.h. die automatische Entriegelung des Stützen-Innenrohres.

In einer zusätzlichen Ausgestaltung der Erfindung ist neben der motorischen Antriebsvorrichtung, wobei ein pneumatischer Betätigungszylinder den Vorzug genießt, jeweils eine Not-Handbetätigung vorgesehen, die beim Versagen des Antriebs, beispielsweise bei Ausfall der Druckluftzufuhr durch Bersten einer Leitung oder dgl., die Möglichkeit bietet die Stütze von Hand aus der Arbeits- in die Transportstellung zu bringen und umgekehrt. Das ist bei dem rauhen und zeitsensiblen Transportgewerbe im heutigen Logistikwesen ein entscheidender Vorteil dieser Neuerung weil im Störfall keine Ausfallkosten des Sattelaufliegers entstehen. Für die Entriegelung und die Verstellung des Stützen-Innenrohres von der Arbeitsstellung in die Transportstellung besteht die Not-Handbetätigung aus einem einfachen Zugmechanismus über den zuerst die Entriegelung erfolgt indem der beispielsweise verwendete, im Störfall inaktiv gewordene pneumatische Betätigungszylinder einen Teileinschub erfährt, wobei über das an diesem befindlichen Blech die Verriegelungsbolzen deaktiviert werden, d.h. deren Verriegelungsfunktion aufgehoben wird. Besonders vorteilhaft ist die erfindungsgemäße Ausgestaltung des Zugmechanismusses nach dem Flaschenzug-Prinzip, weil sich damit auf einfachste Weise die erforderliche manuelle Hubkraft auf die Hälfte des von den Massen der zu bewegenden Stützenteile hervorgerufenen Betrages reduziert, wird. Zur Not-Handbetätigung der Stütze von der Transport- in die Arbeitsstellung dient, wenn z.B. die Verriegelung in Transportsstellung vorzugsweise nur von einem Verriegelungsbolzen bewirkt wird, ein an diesem angebrachter Griffstab, womit der Verriegelungsbolzen nach innen, d.h. in Richtung der Stützenachse verschoben und das Stützen-Innenrohr entriegelt wird, damit es ausfahren kann.

Bei einer bevorzugten Ausgestaltungsform der Erfindung gleitet das am Betätigungszylinder befestigte Blech durch Schlitze in den Verriegelungsbolzen. Wobei die Schlitze von der inneren Stirnseite der Verriegelungsbolzen so weit in den jeweiligen Verriegelungsbolzen hineinreichen, daß das Blech breitenmäßig bei entriegelten Verriegelungsbolzen, d.h. in deren, der Stützenachse nahesten Stellung dazwischen paßt. Steuerbolzen, welche die Restquerschnitte der geschlitzten Bereiche der Verriegelungsbolzen und die Schlitze sowie den Durchbruch des am Betätigungszylinder befestigten Blechs durchdringen, bewirken innerhalb der geschlossenen Steuerbahnkonturen des Blechs bei dessen Vertikalbewegung ein Verschieben der Verriegelungsbolzen, d.h. eine Ver- oder Entriegelung des Stützen-Innenrohres. Weitere Kosten- und Funktionsvorteile bestehen dann, wenn das beschriebene, die Steuerung auslösende Blech einen unteren rechtwinklig abgebogenen Schenkel aufweist und so als L-förmiges Element mit einem horizontalen Befestigungsbereich am Betätigungszylinder und einem vertikalen Funktionsbereich mit Steuerkonturen ausgebildet ist.

Nach einer noch anderen Ausgestaltung der Erfindung sind in vorteilhafter Weise die Verriegelungsbolzen in einem Gehäuse, welches auf die obere Stirnseite des Stützen-Innenrohres aufgesetzt ist verschieblich gelagert. Die Gehäuseunterseite kann auch als Anschlagfläche für die verschiebbar durch das Gehäuse hindurchgeführte Anschlageinrichtung dienen, wodurch ein zusätzliches Anschlagteil wie z.B. eine im Stützen-Innenrohr befestigte Rippe entfällt. Außerdem wird das Gehäuse zur Mitnahme des Stützen-Innenrohres in Richtung Transportstellung durch den Kopf des Betätigungszylinders bzw. dem daran befestigten horizontal abgewinkelten Schenkel des Bleches benutzt. Somit ist der Herstellungs- und Montageaufwand gering und bezüglich der Lagerung sowie Führung der Verriegelungsbolzen ein Optimum erreicht.

Bei einer weiteren Ausgestaltung dieser Erfindung besteht der Vorteil, daß die Verriegelung des Stützen-Innenrohres vom Kontakt der Stütze mit dem Boden ausgelöst wird. Das wird ermöglicht, indem die Verriegelungsbolzen in der Lage sind nach dem Aufsetzen der Fußplatte des Fußteils auf den Boden durch weiteres Einwirken des Betätigungszylinders eine Relativbewegung zur Fußplatte auszuüben, wodurch Dekkungsgleichheit der Verriegelungsbolzen mit den nächstgelegenen Rohrwand-Öffnungen des Stützen-Außenrohres hergestellt wird und wonach die Verriegelung des dem Bodenniveau angepaßten Stützen-Innenrohres erfolgt. Bei paarweiser Stützenanordnung erfolgt auf diese Weise eine individuelle Einstellung der Stütze jeder Seite des Sattelaufliegers zum Boden, wenn dies aufgrund der Unebenheit des Abstellortes erforderlich ist. Das hat den Vorteil, daß es, nicht wie bei herkömmlich paarweise verwendeten Sattelaufliegerstützen mit üblicherweise gekoppeltem Antrieb und somit synchronem Hub, d.h. einer höhenmäßig, zueinander immer gleichen Stellung deren Stützen-Innenrohre bei der Lastaufnahme zu einer unerfreulichen Verwindung des Vorderbereiches des Sattelaufliegers kommt, wenn die Abstellfläche uneben ist. Die erfindungsgemäße Relativbeweglichkeit der Verriegelungsbolzen zur Fußplatte wird beispielsweise erreicht, indem das Gehäuse, worin die Verriegelungsbolzen gelagert sind, höhenbeweglich zum Stützen-Innenrohr angeordnet ist. Wenn die Verriegelung vollzogen ist, d.h. daß der jeweilige Verriegelungsbolzen vollends seine Verriegelungstellung erreicht hat, kann dieses durch einen Endschalter quittiert werden was unter entsprechender Signalauswertung eine zusätzliche Sicherheit darstellt.

Bei der Stütze mit einem erfindungsgemäß gestalteten Fußteil entfallen alle bisher üblichen an der Fußplatte und dem Stützen-Innenrohr angebrachten, schweren, starren oder und beweglichen Teile zur Aufhängung eines sog. Ausgleichsfußes sowie weiterer Teile. Neben einem im Stützen-Innenrohr befindlichen Rollelement, was keine zusätzliche Bauhöhe der Stütze erfordert, sind die wenigen, einfachen, leichten, flexiblen oder und elastischen, zur Befestigung und der Rückstellung der Fußplatte dienenden Elemente geschützt im Inneren des ausfahrbaren Stützenteils untergebracht, d.h. sie sind in das Stützen-Innenrohr integriert und stehen nicht seitlich über. Der bisher üblicherweise erfolgende Anbau von Ausgleichsfüßen mit breiten und hohen Teilen entfällt. Dadurch ist es möglich, daß das Stützen-Innenrohr vollends in das Stützen-Außenrohr einfahren kann, was eine bislang nicht erreichte, besonders geringe, Bauhöhe der erfindungsgemäßen Stütze, im Vergleich zu dem bekannten Stand der Technik derartiger Stützen, ermöglicht.

Eine Stütze nach dieser Erfindung weist äußerlich somit lediglich eine unmittelbar am unteren Ende des Stützen-Innenrohres quer angeordnete Fußplatte auf und läßt alle sonstigen nachteiligen, die Bauhöhe vergrößernden, außen überstehenden Teile herkömmlicher, angebauter Konstruktionen von Ausgleichsfüßen vermissen.

Weitere vorteilhafte Ausgestaltungen und Funktionsabläufe der Erfindung gehen aus den Unteransprüchen hervor.

Die Erfindung wird anschließend anhand der Zeichnungen von Ausführungsbeispielen erläutert. Es zeigen:
**Fig**.1 einen Längsschnitt und im unteren Bereich eine Teilansicht, in teils schematischer Form, einer erfindungsgemäßen Stütze ausgefahren und verriegelt, d.h. in Arbeitsstellung und abgesenktem Zustand;
**Fig.**2 einen weiteren Längsschnitt und im unteren Bereich eine Teilansicht, in teils schematischer Form, der in Fig.1 gezeigten Stütze im eingefahrenen, d.h. in Transportstellung und verriegeltem Zustand;
**Fig.**3 einen Querschnitt der Stütze entlang einer Linie A-A in Fig.1;
**Fig**.4 einen Längsschnitt, in teils schematischer Form, einer erfindungsgemäßen Stütze mit Not-Handbetätigung im ausgefahrenen und verriegeltem Zustand;
**Fig.**5 einen Längsschnitt der Stütze entlang einer Linie A-A in Fig.4;
**Fig**.6 einen Längsschnitt der Stütze entlang der Linie B-B in Fig.4 mit anschließendem um 90° gedrehten Mittelbereich wie in Fig.4, im entriegelten und oben offenen Zustand;
**Fig.**7 einen Längsschnitt der Stütze entlang der Linie C-C in Fig.4 im oben offenen, eingefahrenen und verriegelten Zustand, wobei im Bereich **X** zusätzlich der relevante Verriegelungsbolzen in einer um 90° gedrehten Ebene entsprechend Fig.4 dargestellt ist;
**Fig.**8 einen Querschnitt der Stütze entlang einer Linie D-D in Fig.4;
**Fig.**9 einen Ausschnitt im oberen Bereich des Stützen-Innenrohres aus einem Längsschnitt der Stütze analog der Fig.4;
**Fig**.9a einen Längsschnitt der Stütze analog der Fig.1, linkshälftig unverriegelt und auf der rechten Hälfte in verriegelter Situation gezeigt.
**Fig**.10 einen Längsschnitt des Fußteils der ausgefahrenen Stütze in Arbeitsstellung, mit der Fußplatte am Boden aufstehend und in Grundstellung, d.h. in normaler, mittiger Stellung zur Stützenachse;
**Fig**.11 einen Längsschnitt der Stütze entlang der Linie A-A in Fig.10 jedoch in eingefahrener Stellung, d.h. in Transportstellung;

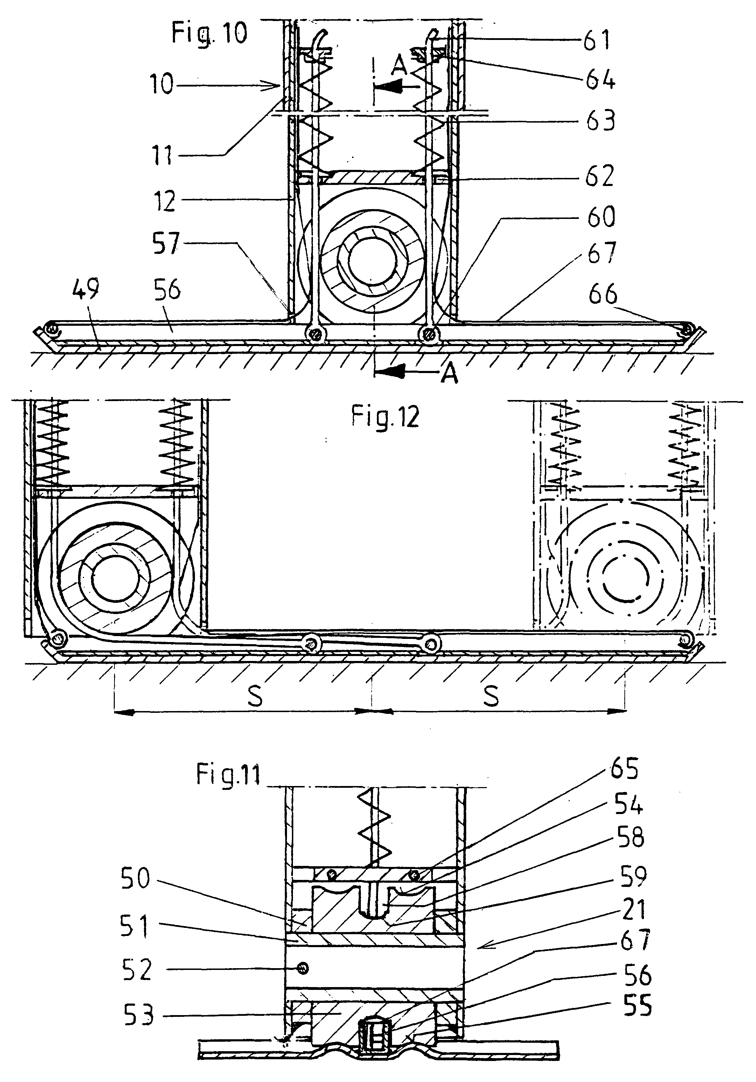

**Fig.**12 einen der Fig.10 ähnlichen Längsschnitt in dem links die Stütze um die Strecke **S** nach vorn (in Fahrtrichtung-Stellung des Sattelaufliegers) verschoben und rechts alternativ um die Strecke **S** nach hinten (entgegengesetzt zur Fahrtrichtung-Stellung des Sattelaufliegers) ausgewandert, in strichpunktierten Linien, dargestellt ist;

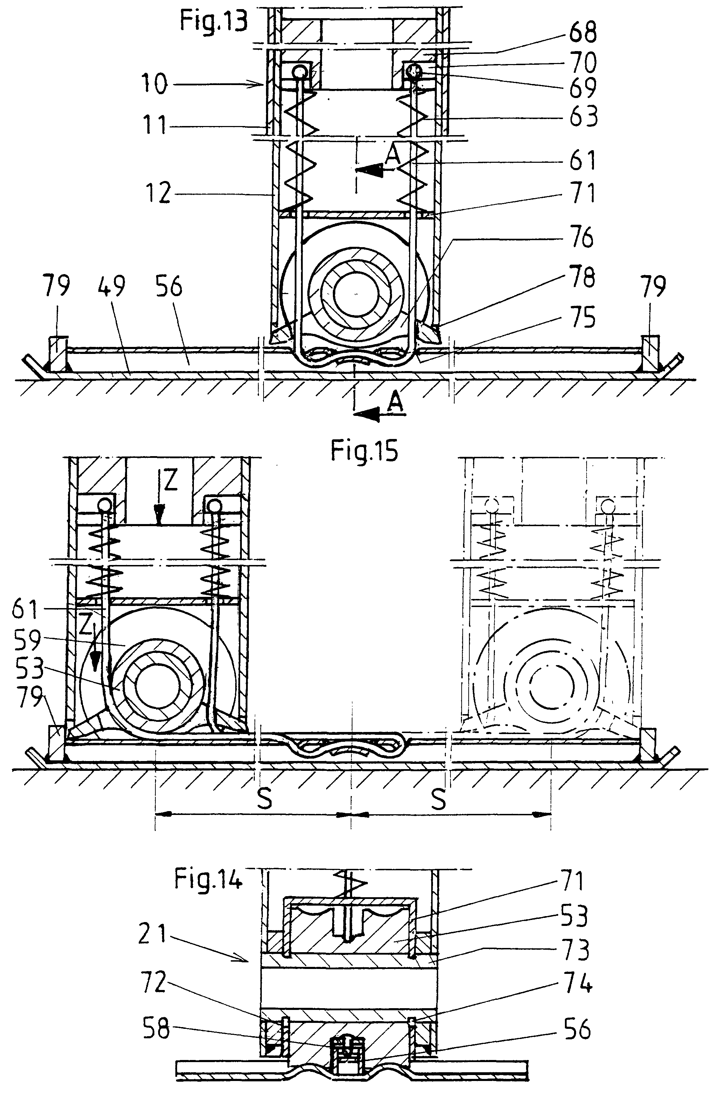

**Fig.**13 einen Längsschnitt analog der Fig.10, jedoch in anderer Ausgestaltung;
**Fig**.14 einen Längsschnitt der Stütze entlang der Linie A-A in Fig.13 jedoch in eingefahrener Stellung (Transportstellung) und
**Fig.**15 einen der Fig.12 analogen Längsschnitt gemäß Fig.13.

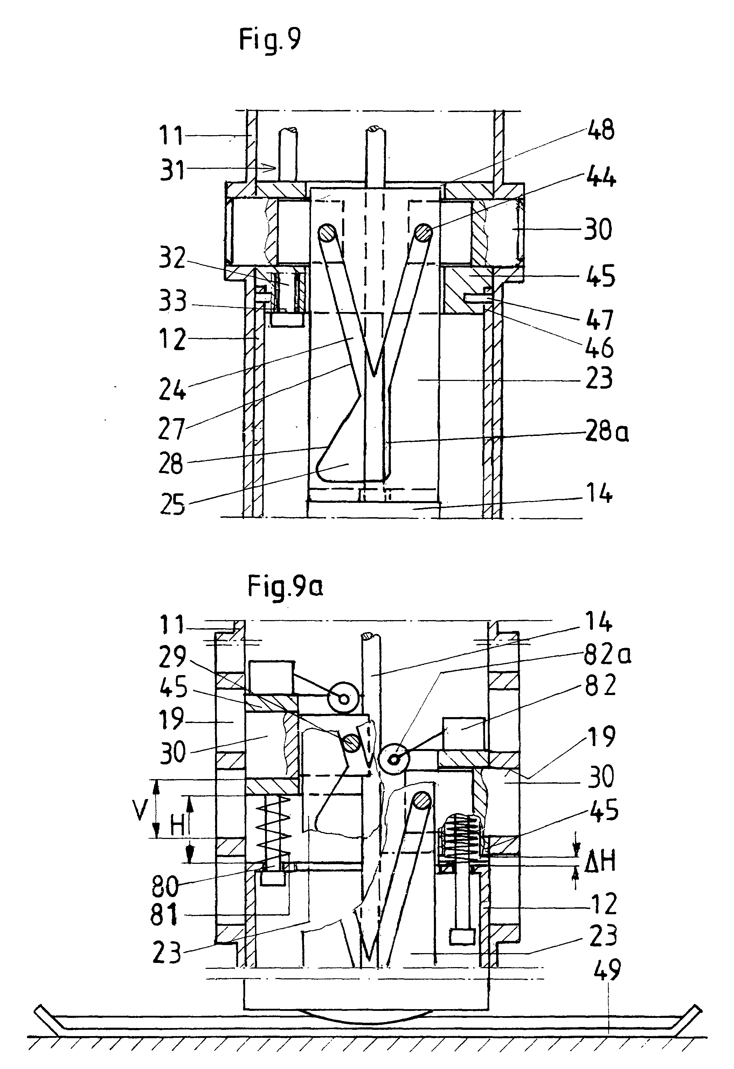

Die in **Fig.**1 bis 15 gezeigte Stütze **10** wird bevorzugt paarweise am Rahmen eines Sattelaufliegers in dessen vorderen Bereich befestigt. Bevor der Sattelauflieger von seinem Zugfahrzeug, dem Sattelschlepper abgekoppelt wird hebt dieser mit seinem Heck den vorderen Bereich des Sattelaufliegers etwas an und die Stützen werden in die Arbeitsstellung gebracht in der sie sich verriegeln. Nach einer in Fig.9a gezeigten Ausführungsform wird das Heck des Sattelschleppers nicht erst angehoben sondern die Stützen **10** werden gleich ausgefahren wobei sich die Arbeitsstellung jeder Stütze **10** individuell dem Boden angleicht bevor die Verriegelung erfolgt. Dann wird das Heck des Sattelschleppers, abgesenkt, wodurch der vordere Teil des Sattelaufliegers über die beiden Stützen **10** am Boden abgestützt wird. Da die Stützen **10** eines jeden Paares an einem Sattelauflieger gleichartig sind, genügt es eine derselben ausführlich zu beschreiben.

Die Stütze **10** weist ein Außenrohr **11** und ein im Außenrohr **11** längsverschieblich gelagertes Innenrohr **12** auf. Beide Stützenrohre **11**, **12** bestehen vorzugsweise aus Vierkantrohren. Das Stützen-Außenrohr **11** ist über nicht gezeigte Flansche an dem Rahmen des Sattelaufliegers befestigt. Im oberen Bereich des Stützen-Außenrohres **11** sind in den gegenüberliegenden Rohrwänden zwei quer zur Rohrachse liegende und horizontal fluchtende, runde Lageröffnungen vorhanden, in die ein in seiner Länge etwa der Kantenlänge des Stützen-Außenrohres **11** entsprechender Achsstab **13** eingesteckt ist, woran die Kolbenstangenverlängerung eines pneumatischen Betätigungszylinders **14** angehängt ist, die aus einem Vierkantstab **15** besteht. Am Vierkantstab **15** sind seitlich spiegelbildlich gegenüberliegend zwei Blattfedern **16** bzw. eine solche mittels Schrauben **17** befestigt. Etwas unterhalb des Achsstabes **13**, um 90° zu den genannten Lageröffnungen versetzt und ebenfalls quer zur vertikalen Rohrachse liegend, sind im Stützen-Außenrohr **11** zwei mittige, horizontal in gleicher Höhe liegende runde Rohrwand-Öffnungen **18** bzw. nur eine solche vorhanden, in deren Höhe auch die oben genannten Blattfedern **16** angeordnet sind bzw. eine solche sitzt. Im unteren Bereich des Stützen-Außenrohres **11** und parallel zu den Rohrwand-Öffnungen **18** befinden sich verstärkte Rohrwand-Öffnungen **19**, die mit den Rohrwand-Öffnungen **18** korrespondieren und deren Nenndurchmesser aufweisen. Das Stützen-Außenrohr **11** ist oben mit einer Kappe **20** verschlossen, deren herabgezogener Rand die Stirnseite des Achsstabes **13** übergreift und an der oberen Stirnfläche des Vierkantstabes **15** verschraubt ist. Damit sichert die Kappe **20** den Achsstab **13** und hält gleichzeitig den Betätigungszylinder **14** in seiner Axiallage. Im oberen Bereich des Stützen-Innenrohres **12** befinden sich mit den Rohrwand-Öffnungen **18**, **19** des Stützen-Außenrohres **11** im Durchmesser etwa gleiche und mit diesen bei Vertikalverschiebung in Deckungsgleichheit zu bringende, fluchtende verstärkte Rohrwand-Öffnungen in Form von nach innen weisenden Trag-/Führungsnaben **22**, die wechselweise ebenso wie die Rohrwand-Öffnungen **18**, **19** des Stützen-Außenrohres **11** der später beschriebenen Verriegelung in Transportstellung als auch in Arbeitsstellung dienen. An bzw. in das untere Ende des verschiebbaren Stützen-Innenrohres **12** ist gemäß dieser Erfindung ein später zu beschriebenes Fußteil **21** ein-/angebaut. Stirnseits am Betätigungszylinder **14** ist ein u-förmiges Blech **23** mit seinem Rücken auf diesem aufsitzend angebracht. Das Blech **23** besitzt in seinen beiden, vertikal nach oben weisenden Schenkeln jeweils v-förmige, gegenüberliegend angeordnet Schlitze **24** mit unten daran anschließenden, schwalbenschwanzförmigen Durchbrüchen **25**. Die schrägen Konturen der Schlitze **24** und Durchbrüche **25** bilden paarweise spiegelbildlich angeordnete obere innere Steuerbahnen **26** und obere äußere Steuerbahnen **27** sowie spiegelbildlich angeordnete untere äußere Steuerbahnen **28** für Führungsstifte **29,** die sich quer an den inneren Endbereichen von zwei Verriegelungsbolzen **30** befinden und mit ihren seitlich überstehen Enden in die Schlitze **24** bzw. Durchbrüchen **25** hineinragen. Die sich im gleichen Schlitze **24** direkt gegenüberliegenden schrägen Steuerbahnen **26**, **27** haben bei vertikaler Auf- oder Abwärtsbewegung eine wechselweise Wirkung auf die Führungsstifte **29** der Verriegelungsbolzen **30**. Die Verriegelungsbolzen **30** sind spiegelbildlich in den Trag-/Führungsnaben **22** des Stützen-Innenrohres **12** verschiebbar gelagert. Beim Ausfahren des Betätigungszylinders **14**, d.h. der Verstellung des Stützen-Innenrohres **12** nach unten, bewirkt dieser im Endbereich seines Hubes, daß die Führungsstifte **29** den Steuerbahnen **26** folgend bzw. von diesen geführt und somit zwangsweise bewegt, ein nach außen Schieben der Verriegelungsbolzen **30,** d.h. eine Verriegelung des Stützen-Innenrohres **12** im Stützen-Außenrohres **11**. Dieser Verriegelungsvorgang erfolgt jedoch erst nachdem das Stützen-Innenrohr **12** von einer Anschlageinrichtung **31** gestoppt worden ist. Die Anschlageinrichtung **31** besteht aus einem Stab **32** mit Anschlagbund **33**. Der Stab **32** ist oben an einem Halter **34** im Stützen-Außenrohres **11** befestigt und unten verschieblich durch eine Rippe **35**, die im Stützen-Innenrohr **12** befestigt ist geführt, deren Unterseite auf den Anschlagbund **33** auftrifft, wenn der Verstellhub des Stützen-Innenrohres **12** beendet ist und die Verriegelungsbolzen **30** sich in der zur Verriegelung bereiten Position befinden, d.h. mit den Rohrwand-Öffnungen **19** des Stützen-Außenrohres **11** deckungsgleich sind. Zu Beginn des Einfahrhubes (Verstellung nach oben) des Betätigungszylinders **14** entsteht in gleicher Weise jedoch entgegengesetzt und über die Steuerbahnen **27** ein Einziehen der Verriegelungsbolzen **30** was die Entriegelung bewirkt. Während des Verstellhubes in die Transportstellung sind die Verriegelungsbolzen **30** eingezogen und die unteren horizontalen Ränder des Durchbruches **25** liegen an den Führungsstiften **29** an, worüber das Stützen-Innenrohr **12** mitgenommen, d.h. angehoben wird. Die Verriegelungsbolzen **30** berühren vorteilhafter Weise während des Verstellhubes nicht die Innenwände des Stützen-Außenrohres **11** und verzehren somit keine reibungsbedingte Hubkraft. Erst kurz vor dem Erreichen des oberen Hubendes des Betätigungszylinders **14** laufen die Verriegelungsbolzen **30** auf die Blattfedern **16** auf, wodurch diese vorgespannt werden und die Verriegelungsbolzen **30** ausschieben, was die Transportverriegelung des Stützen-Innenrohres **12** im Stützen-Außenrohr **11** bewirkt. Die Führungsstifte **29** der Verriegelungsbolzen **30** werden dabei an den Steuerbahnen **28** der schwalbenschwanzförmigen Durchbruchs **25** im Blech **23** zur Berührung gebracht. Beim erneuten Verstellvorgang in Richtung Arbeitsstellung der Stütze **10** werden noch vor dem Absenken des Stützen-Innenrohres **12** durch die anfängliche Hubbewegung des Betätigungszylinders **14** über die Steuerbahnen **28**, die Blattfedern **16** überwindend, die Verriegelungsbolzen **30** eingezogen, wodurch das Stützen-Innenrohr **12** entriegelt wird und dann dessen Ausfahren, mit sich von den ortsfesten Blattfedern **16** entfernenden Verriegelungsbolzen **30**, erfolgt.

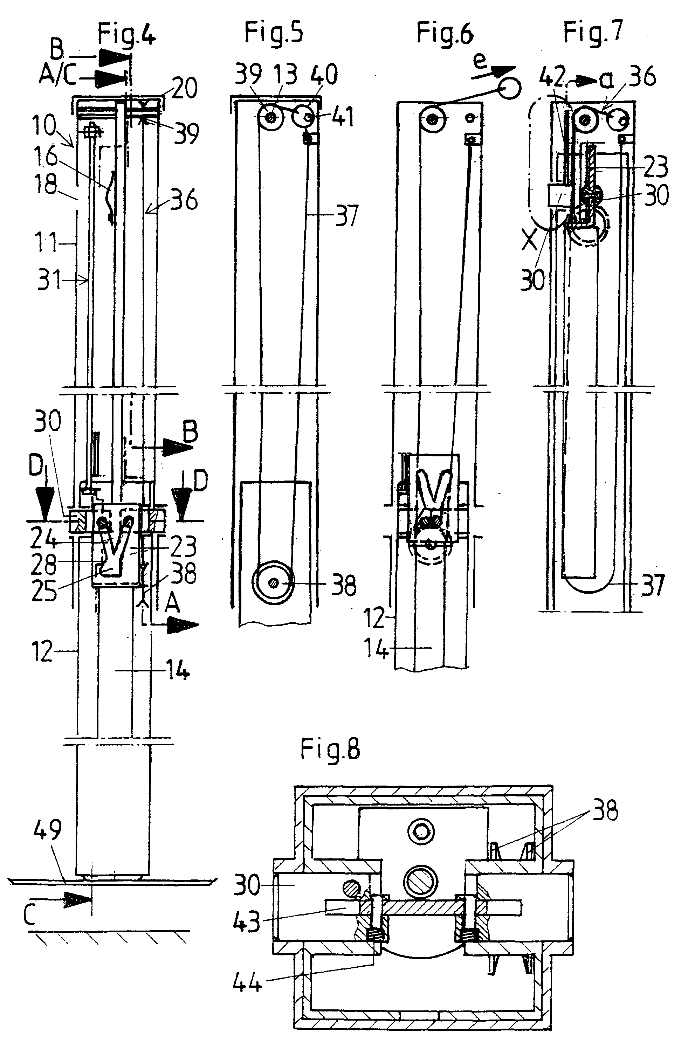

Die gemäß **Fig.**4 bis **8** ausgestaltete Stütze **10** besitzt eine innenliegende Not-Handbetätigung **36** für den Störfall in Arbeitsstellung. Die Not-Handbetätigung **36** besteht aus einem im oberen Bereich des Stützen-Außenrohres **11** befestigten dünnen Drahtseil **37**, einer Umlenkrolle **38**, die am beispielsweise L-förmig ausgebildeten Blech **23**, welches später beschrieben wird, drehbar gelagert ist, einer auf dem hierbei axialfesten Achsstab **13** ortsfest, drehbar abgelagerten Umlenkrolle **39** und einem am freien Ende des Drahtseils **37** befestigten Zugring **40**. Der Zugring **40** ist im Regelfall, d.h. im ungestörten Betrieb der Stütze **10** an einem Verhakungsbolzen **41** im Stützen-Außenrohr **11** verhakt. Die Umlenkrolle **38** stellt nach dem Flaschenzug-Prinzip eine unmittelbar an der zu hebenden Masse befindliche sog. lose Rolle dar, wodurch physikalisch eine Halbierung der erforderlichen Hub-/Zugkraft erreicht wird. Die Länge und Anordnung des Drahtseils **37** sind so abgestimmt, daß das Drahtseil **37** im angehängten, d.h. in seinem geparkten Zustand in Arbeitsstellung des Stützen-Innenrohres **12** etwa hälftig die Umlenkrolle **38** umgreift und in Transportstellung des Stützen-Innenrohres 12 eine durchhängende, aufnahmefähige Seilschlaufe, wie in Fig. 7 gezeigt, bildet. Im Störfall der Stütze **10** nach dem Arbeitseinsatz wird bei abgenommener Kappe **20**, am abgehängten Zugring **40** anfassend, das Drahtseil **37** in einer der Pfeilrichtung **e** in Fig. 6 nahen Richtung gezogen. Dadurch erfolgt ein Einschieben des Betätigungszylinders **14**, indem das Gehäuse des Betätigungszylinders **14** und damit das Blech **23** mit der Umlenkrolle **38** angehoben werden und das Stützen-Innenrohr **12** zunächst entriegelt und dann eingezogen wird. Mit Erreichen der oberen Endstellung des Stützen-Innenrohres **12** erfolgt dessen Transportverriegelung in gleicher Weise wie im Fall des vorher beschriebenen pneumatischen Antriebs. Danach wird das Drahtseil **37** in die Stütze **10** zurückgeschoben, der Zugring **40** am Verhakungsbolzen **41** verhakt und das Stützen-Außenrohr **11** wieder mit der Kappe **40** verschlossen. Der Not-Handbetätigung **36** ist somit wieder für einen etwaigen späteren Störfall einsatzbereit. Für den Fall einer Störung des motorischen Antriebes wenn sich die Stütze **10** in Transportstellung befindet ist am später beschriebenen aktiven Verriegelungsbolzen **30** ein Griffstab **42** angebracht, welcher nach oben an den Rand des Stützen-Außenrohres **11** ragt und womit, bei ebenfalls abgenommener Kappe **40,** die manuelle Not-Entriegelung des Stützen-Innenrohres **12** ermöglicht wird. Durch Verschieben des Griffstabes **42** in Richtung **a** (s. Fig. 7) wird der Verriegelungsbolzen **30** aus seiner Verriegelungsstellung gebracht, das Stützen-Innenrohr **12** sinkt ab und bei Erreichen der Arbeitsstellung wo, wie vorher beschrieben, dessen Stop von der Anschlageinrichtung **31** bewirkt wird, erfolgt durch die noch weiter in Fallbewegung befindlichen Massen des Gehäuses des Betätigungszylinders **14**, sowie der Verriegelungsbolzen **30** usw. die Verschiebung letzterer nach außen und damit die Verriegelung des Stützen-Innenrohres **12** im Stützen-Außenrohr **11**. Am Kopf des Betätigungszylinders **14** ist stirnseits das vorher erwähnte L-förmige Blech **23** angebracht, dessen längerer Schenkel, in der Längsachse der Stütze **10** liegend, nach oben ragt und die Schlitze **24** sowie, bei dieser Ausgestaltung, einen unsymmetrischen Durchbruch **25** besitzt. Die Verriegelungsbolzen **30** weisen bei spiegelbildlicher Anordnung mittige, in ihrer Achse liegende Schlitze **43** auf, die von den inneren Stirnseiten ausgehend so lang sind, daß in der Entriegelungsstellung der Verriegelungsbolzen **30** der vertikale Schenkel des L-förmigen Blechs **23**, dessen Dicke etwas geringer als die Breite der Schlitze **43** ist, breitenmäßig in die Schlitze **43** der mit ihren Enden aneinander stehenden Verriegelungsbolzen **30** paßt. Im inneren Endbereich der Veriegelungsbolzen **30** befinden sich bei dieser Ausgestaltung von außen, quer in die Verriegelungsbolzen **30** eingesteckte und verschraubte Steuerbolzen **44**, welche auch die Schlitze **24** bzw. den Durchbruch **25** des Blechs **23** durchdringen. Die aneinander anschließenden Ränder der Schlitze **24** und des Durchbruchs **25** bilden im Blech **23** eine geschlossene Steuerkontur und bewirken, wie in der vorher beschriebenen Ausgestaltung, bei vertikaler Bewegung des Blechs **23** ein Verschieben der Verriegelungsbolzen **30** und somit die Ver- oder Entriegelung des Stützen-Innenrohres **12** im Stützen-Außenrohr **11**. Der Durchbruch **25** hat bei dieser Ausgestaltung der Erfindung nur eine schräge Steuerbahn **28** an einer nur einseitigen Erweiterung nach unten, d.h. nicht in schwalbenschwanzförmiger Form wie bei der vorausgegangenen Ausgestaltungsform. Dadurch wird zwecks Verriegelung in der Transportstellung der Stütze **10**, von nur einer vorhandenen Blattfeder **16**, nur ein Verriegelungsbolzen **30** nach außen verschoben. Da in Transportstellung der Stütze **10** lediglich deren relativ geringen beweglichen Massen zu halten sind, ist nur einer, der für die Aufnahme der vielfach größeren Stützlast in Arbeitsstellung der Stütze **10** ausgelegten Verriegelungsbolzen **30** weitaus ausreichend. Damit wird die Ausgestaltung sowie Bedienung der beschriebenen Not-Handbetätigung, nämlich unter Benutzung von nur einem, bei der Transportverriegelung aktiven, mit dem Griffstab **42** ausgestatteten Verriegelungsbolzen **30** vereinfacht. Hinzu kommt ein wirtschaftlicher Vorteil durch Wegfall einer zweiten Blattfeder **16** sowie einer Rohrwand-Öffnung **18** im Stützen-Außenrohr **11**.

Die in **Fig.**9 gezeigte Stütze **10** weist ein Gehäuse **45** auf, welches auf das obere Ende des Stützen-Innenrohres **12** aufgesetzt ist, sich mit einem Fortsatz **46** im Stützen-Innenrohr **12** zentriert und mittels Zylinderstiften **47** am Stützen-Innenrohr **12** befestigt ist. Im Gehäuse **45** sind die Verriegelungsbolzen **30** axial verschiebbar gelagert. Außerdem weist das Gehäuse **45** eine Öffnung **48** auf, welcher von dem Blech **23** durchdrungen wird. Durch das Gehäuse **45** ist ferner der Stab **32** der Anschlageinrichtung **31** mit Spiel verschieblich hindurchgeführt. Der Boden des Gehäuses **45** schlägt beim Erreichen der Arbeitsstellung des Stützen-Innenrohres **12** an den Anschlagbund **33** an wodurch das Stützen-Innenrohr **12** gestoppt wird. Nach der Entriegelung und dem Anheben des Stützen-Innenrohres **12** aus der Arbeitsstellung durch das Einfahren des Betätigungszylinders **14** bewegt sich das auf dessen Kopf befestigte L-förmige Blech **23** mit seinem seitlich abgewinkelten Bereich, von unten kommend, gegen den Boden des Gehäuses **45** mit dem daran befestigten Stützen-Innenrohr **12** und nimmt dieses mit bis dessen Transportstellung erreicht ist. Der Durchbruch **25** ist hier alternativ einseitig mit einer vertikalen Steuerbahn **28a** ausgebildet wodurch die Transportverriegelung nur mittels einem Verriegelungsbolzens erfolgt.

**Fig.**9a zeigt eine Stütze **10** bei der das Gehäuse **45**, in dem die Verriegelungsbolzen **30** gelagert sind mittels Führungs-/Zugbolzen **80** und Federn **81** im Abstand **H** höhenbeweglich am Stützen-Innenrohr **12** befestigt ist. Nach dem Aufsetzen der Fußplatte **49** auf den Boden wird vom Betätigungszylinder **14** über das Blech **23** und die Führungsstifte **29** das Gehäuse **45** gegen den Widerstand der Federn **81** abwärts gedrückt. Wenn nach einer Relativbewegung des Gehäuses **45** zur Fußplatte **49** um beispielsweise eine Strecke **V** die Verriegelungsbolzen **30** in Deckungsgleichheit mit den Rohrwand-Öffnungen **19** gebracht sind erfolgt die Verriegelung des Stützen-Innenrohres **12**. Am Gehäuse **45** befinden sich Endschalter **82**, welche mittels ihrer Schaltrolle **82a** die Verriegelungsstellung der Verriegelungsbolzen abtasten und quittieren d.h. die erfolgte Verriegelung signalisieren. Beim anschließenden Belasten der Stütze **10** ergibt sich ein leichtes Absenken um den Betrag **ΔH,** das Gehäuse **45** setzt sich dabei auf das Stützen-Innenrohr **12** auf und die Last wird sicher abgetragen.

Die **Fig.**10 bis 15 zeigen das Fußteil **21** der Stütze **10** in zwei Ausgestaltungsformen. Nach dem Ausfahren der Stützen-Innenrohre **12** und der Übernahmen bzw. dem Verlagern des genannten Gewichtsanteils des Sattelaufliegers über die Fußplatten **49** auf den Boden und dem Abkuppeln des Sattelschleppers nehmen die Stützen **10** eine Stellung wie in Fig, 10, 11 bzw. Fig. 13, 14, in welchen ihr unterer Bereich dargestellt ist, ein. Im unteren Innenbereich des Stützen-Innenrohres **12** der Stützen **10** befinden sich, wie in Fig.11 gezeigt, zwei Verstärkungen **50**, die eine rohrförmige Achse **51** aufnehmen, welche mit einem Spannstift **52** festgesetzt ist. Mittels der rohrförmigen Achse **51** ist ein Rollelement **53** drehbar gelagert, das den Lastdruck auf die Fußplatten **49** überträgt und über zwei umfängliche Roll- und Führungsrillen **54** auf der Fußplatten **49** abrollbar ist. Auf der Fußplatte **49** sind zu diesem Zweck zwei parallele, mittensymetrische, in Längsrichtung verlaufende, Roll- und Führungsspuren **55** in Form von erhabenen Sicken vorhanden, deren Querschnitte und Abstände denen der Roll- und Führungsrillen **54** des Rollelements **53** entsprechen. Die Fußplatte **49** weist ferner ein auf ihr befestigtes, oben offenes u-förmiges Profil **56** auf, welches zu ihrer seitlichen Führung dient. An den Enden des Stützen-Innenrohres **12** und dem Stützen-Außenrohr **11** befinden sich mittige, fluchtende in Fahrtrichtung ausgerichtete und nach unten offene Ausschnitte **57**, in der sich die Fußplatte **49** führt. Zum gleichen Zweck besitzt das Rollelement **53** in der Mitte eine Führungsnut **58** für das Profil **56** der Fußplatte **49**. Die Führungsnut **58** des Rollelements **53** geht in ihrem Grund in eine doppelte Seilführungsrille **59** über. Die Fußplatte **49** ist mittels zweier, im Profil **56** sitzender Bolzen **60** an zwei Drahtseilen **61** beweglich befestigt. Die Drahtseile **61** sind durch eine Halteplatte **62** und zwei Druckfedern **63** hindurch in das Stützen-Innenrohr **12** geführt. Im oberen Bereich der Drahtseile **61** sind auf diese scheibenförmige, mit Feststellschrauben versehene Seilklemmen **64** aufgesteckt und nach Vorspannung der Druckfedern **63** mit den Drahtseilen **61** verklemmt. Die Druckfedern **63** stützen sich an der Halteplatte **62**, die mit Stiften **65** im Stützen-Innenrohr **12** befestigt ist, ab. In Nähe der Enden des oben offenen Profils **56** auf der Fußplatte **49** sind in dessen oberen Bereich mittels Splint **66** zwei spiegelbildlich angeordnete Abdeckbänder **67** aus Federstahl scharnierend befestigt, welche das Profil **56** links und rechts vom Stützen-Innenrohr **12** vollends abdecken. Der freie Endbereich der Abdeckbänder **67** ist jeweils hinter dem Eintritt in das Stützen-Innenrohr **12** nach oben umgelenkt und durch Aussparungen am Rand der Halteplatte **62** vertikal weiter in das Stützen-Innenrohr **12** eingeführt. Oberhalb der Halteplatte **62** wird auf diese Weise innen, an den Wänden des Stützen-Innenrohres **12** anliegend, jeweils soviel Länge der Abdeckbänder **67** magaziniert wie erforderlich ist um ausgezogen, bei größtem Ausgleichshub **S** der Stütze **10**, das Profil 56 der Fußplatte **49** abzudecken und die Drahtseile **61** zu schützen, d.h. Verschmutzungen auszuschließen. Während des Ausgleichshubes in die eine oder andere Richtung wird ein Teilbereich der Drahtseile **61** umgelenkt aus dem Stützen-Innenrohr **12** herausgezogen wobei sich die Druckfedern **63** weiter vorspannen. Gleichzeitig wird ein Abdeckband **67** um einen Teil seiner Länge ausgezogen und das andere Abdeckband **67** um das gleiche Maß eingeschoben. Bei dem am Ende der Standzeit erfolgenden Anheben des vorderen Bereichs des Sattelaufliegers durch den Sattelschlepper wird die Fußplatte **49** der Stütze **10** nach Aufhebung ihrer Bodenberührung automatisch von den Druckfedern **63** in ihre symmetrische Grundstellung zur Stützenachse gebracht, wobei auch die Abdeckbänder **67** in ihre Ausgangsstellung zurückkehren und in diesem Zustand die Verschmutzung des Profils **56** der Fußplatte **49** sowie der Drahtseile **61** während des Transportbetriebes des Sattelzugs verhindern.

Bei der in **Fig.**13 bis 15 gezeigten Ausgestaltung der Erfindung sind die Seilenden an einem Joch **68,** welches sich im Stützen-Innenrohr **12** führt, befestigt. An den Seilenden befinden sich zu diesem Zweck fest angebrachte Nippel **69**, die in Taschen **70** im Joch **68** eingehängt sind. Das Joch **68** wird von vorgespannten Druckfedern **63** abgestützt, die auf einem u-förmig abgekanteten Trag- u. Sicherungsblech **71** aufsitzen. Das Trag- u. Sicherungsblech **71** besitzt zwei fluchtende Bohrungen **72,** deren Durchmesser etwas größer als der einer Achse **73** ist, die ihrerseits zwei Radialnuten **74** aufweist, deren Abstand etwa den der Schenkel des u-förmigen Trag- u. Sicherungsblechs **71** entspricht und deren Breite etwas über der Dicke des Trag- u. Sicherungsblechs **71** liegt. Das Trag- u. Sicherungsblech **71** stützt sich in den Radialnuten **74** an der Achse **73**, welche das Rollelement **53** trägt, ab und fixiert gleichzeitig die Achse **73** da die oberen Randbereiche der Bohrungen **72** von den Druckfedern **63** in die Radialnuten **74** gedrückt werden. Die Befestigung und Rückstellung der Fußplatte **49** erfolgt hierbei vorteilhafter Weise über nur ein Drahtseil **61**, das durch Löcher **75** im Mittelbereich am Profil **56** hindurchgeführt und dort verklemmt ist. Im unteren Bereich der Führungsnut **58** des Rollelement **53** befindet sich eine darin geführte symmetrische Abstreifwippe **76**, deren Enden bei horizontaler Stellung etwa um den halben Durchmesser des Drahtseils **61** über dem Rücken des an der Fußplatte **49** befestigten Profils **56** stehen. Bei der seitlichen Verschiebung des Beins der Stütze **10**, d.h. während deren Ausgleichshub wird die Abstreifwippe **76** von dem auslaufenden Stück des Drahtseils **61** einseitig angehoben wobei ihre andere Seite abwärtsgeschwenkt und so bei weiterer Ausgleichsbewegung der Stütze **10** als Schmutzabstreifer wirkt. Die in der Führungsnut **58** des Rollelements **53** konzentrisch zu diesem gleitende Abstreifwippe **76** ist auch in der Lage einer von den Boden des Standorts bedingte Längsschrägstellung der Fußplatte **49** zu folgen. Zu diesem Zweck ist das Stützen-Innenrohr **12** mit unten offenen Ausschnitten **78** versehen. Diese Ausgestaltung der Erfindung hat den besonderen Vorteil, daß beim Ausgleichshub der Stütze **10** nur das in Ausgleichsrichtung vor dem Rollelement **53** angeordnete Drahtseil **61** bzw. -Teilstück das von dem Rollelement **53**, welches mit seiner Seilführungsrille **59** gleichzeitig als Umlenkrolle wirkt, auf günstige Weise ohne Reibungsverlust umgelenkt wird und das Joch **68** von der Kraft **Z** gegen die beiden Druckfedern **63** herabgezogen wird (s. Fig.15). Damit wird erreicht, daß am gegenüberliegenden Drahtseil **61** bzw. dessen Teilstück, für welches während dieser Ausgleichsbewegung der Stütze **10** das Rollelement **53** nicht als Umlenkrolle wirken kann, keine Zugkraft auftritt, zumal auch die zweite Druckfeder **63**, wie ausgeführt, über das Joch **68** weiter mit vorgespannt wird. Beim Ausgleichshub der Stütze **10** in entgegengesetzter Richtung wird die beschriebene Funktion spiegelbildlich analog ausgeführt, d.h. das Joch **68** wird von dem anderen Drahtseil **61** bzw. -Teilstück herabgezogen und das erstgenannte bleibt beim Ausgleichshub zugfrei. In den Endbereichen der Fußplatte **49** sind Stopper **79** zur Begrenzung des Ausgleichshubs **S** und zur Mitnahme der Fußplatte **49** bei Überhub angebracht.

### Bezugszeichenliste

- **10**: Stütze
- **11**: Stützen-Außenrohr
- **12**: Stützen-Innenrohr
- **13**: Achsstab
- **14**: Betätigungszylinder
- **15**: Vierkantstab
- **16**: Blattfeder
- **17**: Schraube
- **18**: obere Rohrwand-Öffnung
- **19**: untere Rohrwand-Öffnung
- **20**: Kappe
- **21**: Fußteil
- **22**: Trag-/Führungsnabe
- **23**: Blech
- **24**: Steuerschlitz
- **25**: Durchbruch
- **26**: innere Steuerbahn
- **27**: äußere obere Steuerbahn
- **28/28a**: äußere untere Steuerbahn
- **29**: Führungsstift
- **30**: Verriegelungsbolzen
- **31**: Anschlageinrichtung
- **32**: Stab
- **33**: Anschlagbund
- **34**: Halter
- **35**: Rippe
- **36**: Not-Handbetätigung
- **37**: Drahtseil
- **38**: untere Umlenkrolle
- **39**: obere Umlenkrolle
- **40**: Zugring
- **41**: Verhakungsbolzen
- **42**: Griffstab
- **43**: Schlitz
- **44**: Steuerbolzen
- **45**: Gehäuse
- **46**: Fortsatz
- **47**: Zylinderstift
- **48**: Öffnung
- **49**: Fußplatte
- **50**: Verstärkung
- **51**: Achse
- **52**: Spannstift
- **53**: Rollelement
- **54**: Führungsrille
- **55**: Führungsspur
- **56**: u-förmiges Profil
- **57**: Ausschnitt
- **58**: Führungsnut
- **59**: Seilführungsrille
- **60**: Bolzen
- **61**: Drahtseil
- **62**: Halteplatte
- **63**: Druckfeder
- **64**: Seilklemme
- **65**: Stift
- **66**: Splint
- **67**: Abdeckband
- **68**: Joch
- **69**: Nippel
- **70**: Tasche
- **71**: Trag-u. Sicherungsblech
- **72**: Bohrung
- **73**: Achse
- **74**: Radialnut
- **75**: Loch
- **76**: Abstreifwippe
- **78**: Ausschnitt
- **79**: Stopper
- **80**: Führungs-/Zugbolzen
- **81**: Feder
- **82/82a**: Endschalter/Schaltrolle

## Patentansprüche

1. Höhenverstellbare Stütze für Sattelauflieger oder dergleichen mit einem ortsfest angeordneten Außenrohr (**11**) und mittels einer motorischen Antriebsvorrichtung als pneumatischer Betätigungszylinder (**14**) oder dergleichen, in die Arbeits- oder Transportstellung im Außenrohr längsverschiebbar angeordneten Innenrohr (**12**), wobei der Betätigungszylinder (**14**) der Antriebsvorrichtung einen den Verstellweg des Stützen-Innenrohres überschreitenden Hub besitzt, wodurch im Zusammenwirken mit Steuerbahnen die horizontale Verstellung von im Stützen-Innenrohr gelagerten Verriegelungsbolzen (**30**) in im Außenrohr angeordnete Bohrungen bewirkt wird und die Stütze am unteren Ende des ausfahrbaren Stützenteils eine Fußplatte (**49**), auf der sich mindestens ein Rollelement (**53**) abwälzt, oder ein verschiebbares Element bewegt, angeordnet ist und Federn aufweist, womit die Fußplatte (**49**) in der Grundstellung mittig symmetrisch zur Längsachse der Stütze gegen ein Roll- bzw. Schiebeelement gehalten und nach erfolgtem Ausgleichshub und Anheben der Stütze vom Boden die Fußplatte (**49**) in die Grundstellung zurückgezogen wird, **dadurch gekennzeichnet, daß** durch eine am Stützen-Außenrohr (**11**) angebrachte Anschlageinrichtung (**31**) oder durch Bodenberührung am Ende des Ausfahrvorganges das Stützen-Innenrohr (**12**) gestoppt wird, daß ein am Betätigungszylinder (**14**) befestigtes Blech (**23**) mit mindestens einem vertikalen Bereich vorhanden ist, der Steuerbahnen besitzt von denen sowohl gegen Ende des Ausfahrens sowie während der Anfangsphase und gegen Ende des Einfahrens als auch in der Anfangsphase des Ausfahrens des Betätigungszylinders (**14**) verschieblich in oder über dem Stützen-Innenrohr (**12**) gelagerte Verriegelungsbolzen (**30**) horizontal oder und fallweise vertikal und horizontal verschoben werden, daß damit das Stützen-Innenrohr (**12**) im Stützen-Außenrohr (**11**) zwangsläufig verriegelt bzw. entriegelt und ferner - nach der Verriegelung in Transportstellung, die durch mindestens eine ortsfeste, im oberen Stützenbereich höhenmäßig so angebrachte Feder der Art erfolgt, daß die Feder erst kurz bevor das Stützen-Innenrohr (**12**) seine Transportstellung erreicht von einem Verriegelungsbolzen (**30**) angefahren wird, wodurch dieser sich verschiebt - bei einem erneuten Ausfahren der Betätigungszylinder (**14**) ebenfalls entriegelt, daß eine Not-Handbetätigung (**36**) für den Störfall der motorischen Antriebsvorrichtung in Arbeitsstellung als auch für einen Defekt in Transportstellung der Stütze (**10**) vorhanden ist, wobei die Not-Handbetätigung ein am oberen Bereich des Stützen-Außenrohres (**11**) befestigtes biegsames Zugelement wie z.B. ein Drahtseil (**37**) aufweist, das mit einem Ende direkt oder indirekt am Stützen-Innenrohr (**12**) befestigt ist, womit dieses in die Transportstellung eingezogen wird, desweiteren ein Griffstab (**42**) vorhanden ist, der an einem Verriegelungsbolzen (**30**) angebracht von Hand dessen Verschiebung ermöglicht, wodurch das Stützen-Innenrohr (**12**) entriegelbar ist, damit es in die Arbeitsstellung ausfahren kann und daß die Fußplatte der Stütze (**10**) mittels flexibler oder/und elastischer Elemente, welche jeweils mit ihrem einen Ende mit der Fußplatte (**49**) und mit ihrem anderen Ende unter oder ohne Zwischenschaltung von Federn an dem ausfahrenden Stützenteil angebracht sind, befestigt ist.

2. Stütze nach Anspruch 1, **dadurch gekennzeichnet, daß** das am Betätigungszylinder (**14**) befestigte Blech (**23**) in seinem vertikalen Bereich mindestens einen Durchbruch (**25**) und hiervon ausgehende Steuerschlitze (**24**) aufweist, deren innere Konturen v-förmige Steuerbahnen (**26**) und deren äußere Ränder mit denjenigen des Durchbruches obere und untere Steuerbahnen (**27/28**) bilden, von denen die Verriegelungsbolzen (**30**) gesteuert werden.

3. Stütze nach Anspruch 1, **dadurch gekennzeichnet, daß** die Anschlageinrichtung (**31**) aus einem am oberen Bereich des Stützen-Außenrohres (**11**) befestigten, auf Zug beanspruchbaren, starren oder flexiblen Element wie einem Stab (**32**) der beispielsweise eine am Stützen-Innenrohr (**12**) befestigte Rippe (**35**) durchdringt und unterhalb dieser einen Anschlagbund (**33**) aufweist oder aus einem flexiblen Zugelement, das ebenfalls am oberen Bereich des Stützen-Außenrohres (**11**) befestigt ist und dessen unteres Ende am Stützen-Innenrohr (**12**) fixiert ist besteht, wodurch bei Anschlag bzw. bei Streckung das Stützen-Innenrohr (**12**) stoppt wird.

4. Stütze nach Anspruch 1 und 2 **dadurch gekennzeichnet, daß** Verriegelungsbolzen (**30**) Schlitze (**43**) aufweisen durch die das Blech (**23**) gleitet, welches einen vertikalen und einen horizontalen Bereich aufweist und sein horizontaler Bereich am Kopf des Betätigungszylinders (**14**) befestigt ist.

5. Stütze nach Anspruch 1 und 3, **dadurch gekennzeichnet, daß** am oberen Ende des Stützen-Innenrohres (**12**) ein Gehäuse (**45**) befestigt ist, in dem die Verriegelungsbolzen (**30**) axial verschiebbar gelagert sind und dessen Boden als Gegenanschlag für den die Anschlageinrichtung (**31**) dient oder an dem deren flexibles Element befestigt ist.

6. Stütze nach Anspruch 5, **dadurch gekennzeichnet, daß** die Verriegelungsbolzen (**30**) vertikal zur Fußplatte (**49**) verlagert und somit unter Einwirkung des Betätigungszylinders (**14**), in Deckungsgleichheit und zur Verriegelung mit einer Rohrwand-Öffnung (**19**) oder einem Paar Rohrwand-Öffnungen (**19**), die/das durchgängig ist oder auf der Außenseite einen Verschluß aufweist und von denen das Stützen-Außenrohr (**11**) mindestens zwei in der Höhe versetzte aufweist, gebracht werden können, wie es durch eine höhenbewegliche Befestigung des Gehäuses (**45**) mittels Führungs-/Zugbolzen (**80**) und Druckfedern (**81**) am Stützen-Innenrohr (**12**) bewerkstelligt wird und die Verriegelungsstellung der Verriegelungsbolzen (**30**) sensorisch z.B. mittels Endschalter (**82**) quittiert wird.

7. Stütze nach Anspruch 2, **dadurch gekennzeichnet, daß** die Verriegelungsbolzen (**30**) quer sitzende seitlich überstehende Führungsstifte (**29**) aufweisen oder in ihrem inneren Endbereich quer eingebaute Steuerbolzen (**44**) besitzen, welche jeweils die Schlitze (**24**) bzw. den Durchbruch (**25**) des Blechs (**23**) durchdringen.

8. Stütze nach Anspruch 1, **dadurch gekennzeichnet, daß** im oberen Bereich des Stützen-Außenrohres (**11**) oder an der Kolbenstange bzw. deren Verlängerung, des Betätigungszylinders (**14**) mindestens ein federndes Element, wie eine Blattfeder (**16**), angebracht ist, welche den Verriegelungsbolzen (**30**) nach dessen Anfahren axial verschiebt.

9. Stütze nach Anspruch 1, **dadurch gekennzeichnet, daß** das Druckmedium durch die Kolbenstange des Betätigungszylinders (**14**) geleitet wird, die zu diesem Zwecke hohl ist oder, daß vom oberen Bereich der Stütze (**10**) aus ein dort befestigtes feststehendes Rohr abgedichtet in den Zylinderraum des Betätigungszylinders (**14**) hineingeführt ist, mit dem es während des Verstellhubs des Stützen-Innenrohrs (**12**) teleskopiert.

10. Stütze nach Anspruch 1, **dadurch gekennzeichnet, daß** sich die Not-Handbetätigung (**36**) in der Stütze (**10**) befindet und aus einem im oberen Bereich des Stützen-Außenrohres (**11**) befestigten Zugelement wie einem dünnen Drahtseil (**37**), einer unteren Umlenkrolle (**38**), als sog. lose Rolle, die am Blech (**23**) oder Betätigungszylinder (**14**) gelagert ist, und einer oberen Umlenkrolle (**39**) sowie einem am freien Ende des Drahtseils (**37**) befestigten Griffelement wie einem Zugring (**40**), besteht, womit, durch Herausziehen eines Teiles der Länge des Drahtseils (**37**) aus der Stütze (**10**), hintereinander die Entriegelung des Stützen-Innenrohres (**12**) und dessen Verstellung in die Transportstellung in einem Arbeitsgang ermöglicht wird, wonach das Drahtseil (**37**) wieder in der Stütze (**10**) magaziniert wird.

11. Stütze nach Anspruch 1, **dadurch gekennzeichnet, daß** das mindestens eine zur Bewegung auf der Fußplatte (**49**) dienende Rollelement (**53**) oder Verschiebeelement und alle der Befestigung und der Rückstellung der Fußplatte (**49**) dienenden flexiblen oder und elastischen Elemente, wie Drahtseile (**61**) und Druckfedern (**63**), geschützt in das Stützen-Innenrohr (**12**) integriert sind.

12. Stütze nach Anspruch 1, **dadurch gekennzeichnet, daß** die Fußplatte (**49**) mittig auf ihrer Oberseite einen erhabenen Längsbereich besitzt oder ein nach oben offenes Profil (**56**) aufweist, was zur Seitenführung der Fußplatte (**49**) am Stützen-Innenrohr (**12**) oder dem Rollelement (**53**) dient und die flexiblen oder/und elastischen Elemente wie Drahtseile (**61**) mit denen die Fußplatte (**49**) befestigt ist aufnimmt und, daß das Profil (**56**) durch biegsame Abdeckbänder (**67**) abgedeckt ist, die sich in das Stützen-Innenrohr (**12**) schieben bzw. von dort austreten, damit die ebenfalls in das Innere des Stützen-Innenrohres (**12**) durch darin angeordnete und sich dort abstützende Druckfedern (**63**), ein- bzw. hindurchgeführte und darüber befestigten Drahtseile (**61**) auch im Außenbereich geschützt sind.

13. Stütze nach Anspruch 11, **dadurch gekennzeichnet, daß** in ihrem Fußteil (**21**) eine um eine Achse (**73**) schwenkende Abstreifwippe (**76**) vorhanden ist, welche an ihren Enden Lippen aufweist, die, wenn die Abstreifwippe (**76**) auf der einen Seite von einem ausgezogen Stück eines Drahtseils (**61**) angehoben wird, bei Fortsetzung des Ausgleichshubes der Stütze (**10**), mit der Lippe der anderen Seite den Schmutz abstreift und bei Rückstellung der Fußplatte (**49**), bis zum Erreichen der Grundstellung, in gleicher Weise auch das andere der Drahtseile (**61**) abstreift, die durch ein u-förmiges Trag- u. Sicherungsblech (**71**), das zwei fluchtende Bohrungen (**72**), deren Durchmesser etwas größer als die der Achse (**73**) sind, welche Radialnuten (**74**) aufweist, in denen sich das Sicherungsblech (**71**) abstützt und zugleich die Achse (**73**) fixiert, hindurchgeführt sind und, daß die Drahtseile (**61**) an einem im Stützen-Innenrohr (**12**) federnd abgestützten Joch (**68**), dessen Führung z.B. im Stützen-Innenrohr (**12**) erfolgt, befestigt sind.

14. Stütze nach Anspruch 1, **dadurch gekennzeichnet, daß** in den Endbereichen der Fußplatte (**49**) Stopper (**79**) vorhanden sind, die den Ausgleichshub **S** begrenzen und bei weiterer Verschiebung der Stütze (**10**) zur formschlüssigen Mitnahme der Fußplatte (**49**) dienen, damit eine Beschädigung sonstiger, im Zusammenhang mit dem Schubausgleich des Sattelaufliegers stehender Bauteile vermieden wird.

## Claims

1. A height-adjustable support for semitrailers or suchlike with an outer tube (**11**) arranged fixed and an inner tube (**12**) arranged longitudinally displaceable in the outer tube into the working or transport position by means of a motor-drive mechanism as a pneumatic operating cylinder (**14**) or suchlike, whereby the operating cylinder (**14**) of the drive mechanism has a stroke which goes beyond the displacement path of the support inner tube, as a result of which, in cooperation with guide paths, the horizontal shifting of locking bolts (**30**) housed in the support inner tube is effected into drill-holes arranged in the outer tube, and the support has a foot plate (**49**), on which at least one rolling element (**53**) rolls, or a displaceable element moves, arranged at the lower end of the extendable support part and has springs, whereby the foot plate (**49**) in the starting position is held centrally symmetric to the longitudinal axis of the support against a rolling or sliding element and after the completed balancing stroke and raising of the support from the ground the foot plate (**49**) is retracted into the starting position, **characterised in that,** by means of a stop device (**31**) fitted on the support outer tube (**11**) or by contact with the ground at the end of the extension procedure, the support inner tube (**12**) is stopped, that a metal plate (**23**) fixed to the operating cylinder (**14**) with at least one vertical zone is present, which has guide paths by which locking bolts (**30**) are displaced horizontally and/or from case to case vertically and horizontally, said locking bolts being housed in or over the support inner tube (**12**) such as to be displaceable both towards the end of the extension as well as during the initial phase and towards the end of the retraction and also in the initial phase of the extension of the operating cylinder (**14**), that the support inner tube (**12**) is thus automatically locked and/or unlocked in the support outer tube (**11**) and furthermore - after the locking in the transport position, which takes place by means of at least one fixed spring which is fitted at a height in the upper support zone such that the spring is run up against by a locking bolt (**30**) only shortly before the support inner tube (**12**) reaches its transport position, as a result of which said locking bolt is displaced - is also unlocked with a renewed extension of the operating cylinder (**14**), that an emergency manual operation (**36**) is available for the event of malfunctioning of the motor-drive mechanism in the working position as well as for a defect in the transport position of the support (**10**), whereby the emergency manual operation has a flexible pulling element, such as for example a wire cable (**37**), fixed to the upper zone of the support outer tube (**11**), said pulling element being fixed with one end directly or indirectly to the support inner tube (**12**), whereby the latter is pulled into the transport position, and furthermore a grip rod (**42**) is available which, attached to a locking bolt (**30**), enables displacement thereof manually, as a result of which the support inner tube (**12**) can be unlocked, in order that it can extend into the working position, and that the foot plate of the support (**10**) is fixed by means of flexible and/or elastic elements which are fitted respectively with their one end to the foot plate (**49**) and with their other end, with or without the interposition of springs, to the extending support part.

2. The support according to claim 1, **characterised in that** the metal plate (**23**) fixed to the operating cylinder (**14**) has in its vertical zone at least one opening (**25**) and guide slots (**24**) issuing therefrom, whose inner contours form v-shaped guide paths (**26**) and whose outer edges with those of the opening form upper and lower guide paths (**27**/**28**) by which the locking bolts (**30**) are guided.

3. The support according to claim 1, **characterised in that** the stop device (**31**) comprises a rigid or flexible element under tension such as a rod (**32**) fixed to the upper zone of the support outer tube (**11**), said element penetrating for example a rib (**35**) fixed to the support inner tube (**12**) and having a stop shoulder (**33**) beneath said rib, or a flexible pulling element which is also fixed to the upper zone of the support outer tube (**11**) and whose lower end is fixed to the support inner tube (**12**), as a result of which the support inner tube (**12**) is stopped at the stop or upon extension.

4. The support according to claim 1 and 2, **characterised in that** locking bolts (**30**) have slots (**43**) through which the metal plate (**23**) slides, which has a vertical and a horizontal zone and its horizontal zone is fixed to the head of the operating cylinder (**14**).

5. The support according to claim 1 and 3, **characterised in that** there is fixed to the upper end of the support inner tube (**12**) a housing (**45**), in which the locking bolts (**30**) are mounted so as to be axially displaceable and whose base serves as a counter-stop for the stop device (**31**) or to which its flexible element is fixed.

6. The support according to claim 5, **characterised in that** the locking bolts (**30**) can be shifted vertical to the foot plate (**49**) and thus be brought under the effect of the operating cylinder (**14**), to coincide with and for the purpose of locking with a tube-wall opening (**19**) or a pair of tube-wall openings (**19**), which is/are throughgoing or have a seal on the outside and of which the support outer tube (**11**) has at least two offset in height, as is brought about by a height-adjustable fixing of the housing (**45**) by means of guide/tension bolts (**80**) and compression springs (**81**) on the support inner tube (**12**), and the locking position of the locking bolts (**30**) is acknowledged by a sensor, for example by means of a limit switch (**82**).

7. The support according to claim 2, **characterised in that** the locking bolts (**30**) have transversely seated, laterally projecting guide pins (**29**) or in their inner end zone have transversely installed guide bolts (**44**) which penetrate respectively the slots (**24**) and the opening (**25**) of the metal plate (**23**).

8. The support according to claim 1, **characterised in that,** in the upper zone of the support outer tube (**11**) or on the piston rod, or extension thereof, of the operating cylinder (**14**), at least one spring element, such as a leaf spring (**16**), is fitted, which axially displaces the locking bolt (**30**) after the latter runs up.

9. The support according to claim 1, **characterised in that** the pressure medium is conveyed through the piston rod of the operating cylinder (**14**), said piston rod being hollow for this purpose, or that, from the upper zone of the support (**10**), a stationary tube fixed there is guided in a sealed manner into the cylinder chamber of the operating cylinder (**14**), with which it telescopes during the adjustment stroke of the support inner tube (**12**).

10. The support according to claim 1, **characterised in that** the emergency manual operation (**36**) is located in the support (**10**) and comprises a pulling element such as a thin wire cable (**37**) fixed in the upper zone of the support outer tube (**11**), a lower deflection roller (**38**), as a so-called loose roller, which is mounted on the metal plate (**23**) or operating cylinder (**14**), and an upper deflection roller (**39**) as well as a grip element such as a pull ring (**40**) fixed to the free end of the wire cable (**37**), whereby, by pulling out a part of the length of the wire cable (**37**) from the support (**10**), the unlocking of the support inner tube (**12**) and its adjustment into the transport position is enabled in succession in one operating cycle, after which the wire cable (**37**) is again stored in the support (**10**).

11. The support according to claim 1, **characterised in that** the at least one rolling element (**53**) or sliding element used for the movement on the foot plate (**49**) and all the flexible and/or elastic elements used for the fixing and return of the foot plate (**49**), such as wire cables (**61**) and compression springs (**63**), are integrated in a protected manner into the support inner tube (**12**).

12. The support according to claim 1, **characterised in that** the foot plate (**49**) has a raised longitudinal zone or an upwardly open profile (**56**) in the centre on its upper side, which is used for the lateral guidance of the foot plate (**49**) on the support inner tube (**12**) or the rolling element (**53**) and accommodates the flexible and/or elastic elements such as wire cables (**61**) with which the afoot plate (**49**) is fixed, and that the profile (**56**) is covered by flexible cover bands (**67**), which are pushed into the support inner tube (**12**) or emerge therefrom, in order that the wire cables (**61**), which are also guided into and through the inside of the support inner tube (**12**) through compression springs (**63**) arranged therein and supported there and which are fixed above it, are also protected in the external zone.

13. The support according to claim 11, **characterised in that** a scraping rocker (**76**) swivelling about a spindle (**73**) is present in its foot part (**21**), said rocker having lips at it ends, which, when the scraping rocker (**76**) is raised on one side by a pulled-out piece of a wire cable (**61**), with continuation of the balancing stroke of the support (**10**), scrapes the dirt with the lip of the other side and upon return of the foot plate (**49**), until the starting position is reached, in the same way also scrapes the other of the wire cables (**61**), which are guided through a u-shaped supporting and securing metal plate (**71**), which has two aligned drill-holes (**72**), whose diameter is somewhat larger than that the axle (**73**), which has radial grooves (**74**) in which the securing metal plate (**71**) rests and at the same time fixes the axle (**73**), and that the wire cables (**61**) are fixed to a yolk (**68**) supported in a spring-mounted manner in the support inner tube (**12**), the guidance of said yolk taking place for example in the support inner tube (**12**).

14. The support according to claim 1, **characterised in that,** in the end zones of the foot plate (**49**), stoppers (**79**) are present which restrict the balancing stroke **S** and with further displacement of the support (**10**) are used to carry along the foot plate (**49**) in a key manner, in order that damage to other components connected with the shear compensation of the semitrailer is avoided.

## Revendications

1. Béquille réglable en hauteur pour semi-remorque ou similaire avec un tube externe à emplacement fixe (**11**) et un tube interne (**12**) pouvant être décalé en longueur en position de travail ou de transport disposé dans le tube externe au moyen d'un dispositif d'entraînement motorisé comme vérin d'actionnement pneumatique (**14**) ou similaire, le vérin d'actionnement (**14**) du dispositif d'entraînement possédant une course dépassant la trajectoire de décalage du tube interne de la béquille, ce qui provoque en action conjointe avec des rails de direction le décalage horizontal de goujons de verrouillage (**30**) installés dans le tube interne de la béquille dans des alésages pratiqués dans le tube externe et une plaque de pied (**49**), sur laquelle roule au moins un élément roulant (**53**) ou se déplace un élément mobile étant disposée à l'extrémité inférieure de la partie extensible de la béquille et présentant des ressorts, grâce auxquels la plaque de pied (**49**) est maintenue en position de base au centre symétriquement à l'axe longitudinal de la béquille contre un élément roulant ou coulissant et la plaque de pied (**49**) étant ramenée en position de base après la fin de la course de compensation et le levage de la béquille du sol, **caractérisée en ce que** le tube interne de béquille (**12**) est arrêté par une installation de butée (**31**) installée sur le tube externe de béquille (**11**) ou par contact avec le sol à la fin de l'opération d'extension, qu'une tôle (**12**) est fixée sur le cylindre d'actionnement (**14**) avec au moins une partie verticale qui possède des rails de direction, par lesquels, aussi bien à la fin de la sortie que pendant la phase initiale et à la fin de la rétraction aussi bien qu'en phase initiale de sortie du vérin d'actionnement (**14**), des goujons de verrouillage (**30**) installés de façon mobile dans ou au dessus du tube interne de béquille (**12**) sont décalés horizontalement ou selon les cas verticalement et horizontalement, qu'ainsi le tube interne de la béquille (**12**) est obligatoirement verrouillé ou déverrouillé dans le tube externe de la béquille (**11**) et de plus -après le verrouillage en position de transport, qui est réalisé par l'intermédiaire d'au moins un ressort à emplacement fixe disposé dans la partie supérieure de la béquille en hauteur de manière à ce que le ressort ne soit rejoint par un goujon de verrouillage (**30**) que peu avant que le tube interne de béquille (**12**) ait atteint sa position de transport, ce qui le décale -le déverrouille également lors d'une nouvelle sortie du vérin d'actionnement (**14**), qu'il y a un actionnement manuel d'urgence (**36**) pour le cas d'une panne du dispositif d'entraînement motorisé en position de travail aussi bien qu'en cas de défaut en position de transport de la béquille (**10**), l'actionnement manuel d'urgence présentant un élément de traction souple, comme par exemple un câble métallique (**37**), fixé à la partie supérieure du tube externe de la béquille (**11**), qui est fixé par une extrémité directement ou indirectement sur le tube interne de la béquille (**12**), ce qui le rentre en position de transport, qu'il y a de plus une barre de préhension (**42**) qui est installée sur un goujon de verrouillage (**30**) et permet son décalage à la main, ce qui permet de déverrouiller le tube interne de la béquille (**12**) afin qu'il puisse sortir en position de travail, et que la plaque de pied de la béquille (**10**) est fixée au moyen d'éléments flexibles ou/et élastiques qui reposent respectivement par une de leurs extrémités sur la plaque de pied (**49**) et par leur autre extrémité avec ou sans entremise de ressorts sur la pièce de béquille sortante.

2. Béquille selon la revendication 1, **caractérisée en ce que** la tôle (**23**) fixée sur le vérin d'actionnement (**14**) présente dans sa partie verticale au moins une percée (**25**) et des fentes de direction (**24**) en partant, dont les contours internes forment des rails de direction (**26**) en forme de V et dont les bords extérieurs forment avec ceux de la percée des rails de direction supérieurs et inférieurs (**27/28**) qui dirigent les goujons de verrouillage (**30**).

3. Béquille selon la revendication 1, **caractérisée en ce que** l'installation de butée (**31**) consiste en un élément rigide ou flexible pouvant être sollicité à la traction fixé à la partie supérieure du tube externe de la béquille (**11**), comme par exemple une barre (**32**) qui traverse par exemple une cannelure (**35**) fixée sur le tube interne de la béquille (**12**) et présente en dessous de celle-ci un rebord de butée (**33**) ou en un élément de traction flexible, qui est également fixé à la partie supérieure du tube externe de la béquille (**11**), et dont l'extrémité inférieure est fixée sur le tube interne de la béquille (**12**), ce qui stoppe le tube interne de béquille (**12**) en cas de butée ou d'extension.

4. Béquille selon les revendications 1 et 2, **caractérisée en ce que** les goujons de verrouillage (**30**) présentent des fentes (**43**) à travers lesquelles glisse la tôle (**23**), qui présente une partie verticale et une partie horizontale et que sa partie horizontale est fixée à la tête du vérin d'actionnement (**14**).

5. Béquille selon les revendications 1 et 3, **caractérisée en ce qu'**à l'extrémité supérieure du tube interne de béquille (**12**) est fixé un boîtier dans lequel les goujons de verrouillage (**30**) sont logés avec mobilité axiale et dont le fond sert de contre-butée pour l'installation de butée (**31**) ou auquel est fixé son élément flexible.

6. Béquille selon la revendication 5, **caractérisée en ce que** les goujons de verrouillage (**30**) sont décalés verticalement par rapport à la plaque de pied (**49**) et peuvent ainsi être amenés, sous l'effet du vérin d'actionnement (**14**), en égalité de couverture et en verrouillage avec un orifice (**19**) dans la paroi de tube ou une paire d'orifices (**19**) dans la paroi de tube, qui est continu(e) ou présente sur sa face externe un obturateur et dont le tube externe de béquille (**11**) en présente au moins deux décalés en hauteur, comme ceci est réalisé par une fixation mobile en hauteur du boîtier (**45**) au moyen de goujons de guidage/traction (**80**) et de ressorts de compression (**81**) sur le tube interne de la béquille (**12**) et que la position de verrouillage des goujons de verrouillage (**30**) est quittée par détection par exemple au moyen d'un interrupteur de fin de course (**82**).

7. Béquille selon la revendication 2, **caractérisée en ce que** les goujons de verrouillage (**30**) présentent des tiges de guidage (**29**) dépassant latéralement installées en travers ou possèdent dans leur partie extrême interne des goujons de direction (**44**) montés en travers, qui traversent respectivement la fente (**24**) ou la percée (**25**) de la tôle (**23**).

8. Béquille selon la revendication 1, **caractérisée en ce que,** dans la partie supérieure du tube externe de béquille (**11**) ou sur la bielle de piston ou son prolongement du vérin d'actionnement (**14**), au moins un élément faisant ressort, comme un ressort à lames (**16**), est disposé, qui décale dans le sens axial le goujon de verrouillage (**30**) après l'avoir rejoint.

9. Béquille selon la revendication 1, **caractérisée en ce que** le milieu de pression est conduit par la bielle de piston du vérin d'actionnement (**14**), qui est à cet effet creuse, ou qu'à partir de la partie supérieure de la béquille (**10**), un tube qui y est installé fixement est introduit de manière étanche dans la cellule de vérin du vérin d'actionnement (**14**), avec lequel il se télescope pendant la course de décalage du tube interne de la béquille (**12**).

10. Béquille selon la revendication 1, **caractérisée en ce que** l'actionnement manuel d'urgence (**36**) se trouve dans la béquille (**10**) et consiste en un élément de traction fixé dans la partie supérieure du tube externe de béquille (**11**), comme un câble métallique mince (**37**), un cylindre d'inversion inférieur (**38**) en tant que rouleau dit flottant qui est placé sur la tôle (**23**) ou le cylindre d'actionnement (**14**), et en un cylindre d'inversion supérieur (**39**) ainsi qu'en un élément de préhension fixé à l'extrémité libre du câble métallique (**37**), comme un anneau de traction (**40**), ce qui, par extraction d'une partie de la longueur du câble métallique (**37**) hors de la béquille (**10**), permet successivement le déverrouillage du tube interne de la béquille (**12**) et son décalage en position de transport en une opération, après quoi le câble métallique (**37**) est de nouveau rangé dans la béquille (**10**).

11. Béquille selon la revendication 1, **caractérisée en ce qu'**au moins un élément roulant (**53**) servant au déplacement sur la plaque de pied (**49**) ou élément de décalage et tous les éléments flexibles ou/et élastiques servant à la fixation et au rappel de la plaque de pied (**49**), comme les câbles métalliques (**61**) et les ressorts de compression (**63**), sont intégrés à l'abri dans le tube interne de la béquille (**12**).

12. Béquille selon la revendication 1, **caractérisée en ce que** la plaque de pied (**49**) possède au centre de sa face supérieure une partie allongée en relief ou un profil (**56**) ouvert vers le haut qui sert au guidage latéral de la plaque de pied (**49**) sur le tube interne de la béquille (**12**) ou l'élément roulant (**53**) et reçoit les éléments flexibles ou/et élastiques comme les câbles métalliques (**61**) avec lesquels la plaque de pied (**49**) est fixée, et que le profil (**56**) est recouvert par des bandes de recouvrement (**67**) souples qui se glissent dans le tube interne de la béquille (**12**) ou en sortent, afin que les câbles métalliques (**61**) qui sont introduits ou poussés également à l'intérieur du tube interne de béquille (**12**) par des ressorts de compression (**63**) qui y sont installés et s'y appuient et les câbles métalliques (**61**) fixés dessus soient également protégés sur leur partie extérieure.

13. Béquille selon la revendication 11, **caractérisée en ce que,** dans sa pièce de pied (**21**), se trouve une bascule de raclage (**76**) pivotant autour d'un axe (**73**) qui présente à ses extrémités des lèvres qui, lorsque la bascule de raclage (**76**) est levée sur un côté par un morceau sorti de câble métallique (**61**), lors de la poursuite de la course de compensation de la béquille (**10**), racle les salissures avec la lèvre de l'autre côté et, lors du rappel de la plaque de pied (**49**), racle jusqu'à atteindre la position de base de la même manière également l'autre des câbles métalliques (**61**) qui sont introduits à travers une tôle de portage et sécurité en forme de U (**71**), qui présente deux alésages alignés (**72**) dont les diamètres sont un peu supérieurs à ceux de l'axe (**73**), qui présente des rainures radiales (**74**) dans lesquelles la tôle de sécurité (**71**) s'appuie et en même temps fixe l'axe (**73**), et que les câbles métalliques (**61**) sont fixés à une armature (**68**) s'appuyant avec ressort dans le tube interne de béquille (**12**), dont le guidage se fait par exemple dans le tube interne de béquille (**12**).

14. Béquille selon la revendication 1, **caractérisée en ce que,** dans les parties extrêmes de la plaque de pied (**49**) se trouvent des arrêts (**79**) qui limitent la course de compensation **S** et servent lors de la poursuite du décalage de la béquille (**10**) à l'entraînement par liaison mécanique de la plaque de pied (**49**), afin d'éviter une détérioration des autres pièces de construction en relation avec la compensation de poussée du semi-remorque.
